# EUROPEAN PATENT SPECIFICATION

(11) **EP 4 323 884 B1**
(45) Date of publication and mention of the grant of the patent: **09.07.2025**
(21) Application number: 22788559.7
(22) Date of filing: 11.04.2022
(51) Int. Cl.: H04L 67/06, G06F 11/30, G06F 11/34, G16Y 40/10, H04L 67/12

(54) **METHOD AND SYSTEM FOR TRANSMITTING MONITORING DATA, AND PERIPHERY DEVICE**
VERFAHREN UND SYSTEM ZUR ÜBERTRAGUNG VON ÜBERWACHUNGSDATEN UND PERIPHERIEVORRICHTUNG
PROCÉDÉ ET SYSTÈME DE TRANSMISSION DE DONNÉES DE SURVEILLANCE ET DISPOSITIF PÉRIPHÉRIQUE

(30) Priority: 15.04.2021 CN 202110408032
(43) Date of publication of application: 21.02.2024
(73) Proprietor: Univers Pte. Ltd., Singapore 098632 (SG); Spic Envision Intelligence Technology (Jiangsu) Co., Ltd. (Formerly Known As Jiangsu Envision Digital Co., Ltd.), Wuxi, Jiangsu (CN)
(72) Inventor: QIAN, Jialin, Wuxi, Jiangsu (CN); CUI, Changdong, Wuxi, Jiangsu (CN); ZHANG, Yang, Wuxi, Jiangsu (CN)
(74) Representative: Dennemeyer & Associates S.A.
(86) International application number: PCT/SG2022/050208
(87) International publication number: WO 2022/220745

(56) References cited:
- CN-A- 104 410 828
- CN-A- 106 325 162
- CN-A- 106 649 031
- CN-A- 111 565 222
- CN-B- 105 119 974
- CN-U- 206 133 561
- US-A1- 2020 110 747
- US-A1- 2020 213 666

## Description

### TECHNICAL FIELD

The present disclosure relates to the field of computer technologies, and in particular, relates to a method and system for transmitting monitoring data, and a periphery device.

### BACKGROUND

The Internet of things (IoT) is "the Internet where everything is interconnected." The IoT enables ordinary objects to be interconnected and intercommunicated.

In the related art, the IoT applicable to the monitoring field of a photovoltaic power station may include a monitoring device, a periphery device, and a cloud. The periphery device is communicably connected to the monitoring device and the cloud, and the monitoring device may transmit monitored monitoring data to the cloud for storage through the periphery device. The cloud may also be referred to as a cloud platform, and is realized by a device having a data storage function.

However, upon acquiring monitoring data from the monitoring device, the periphery device directly transmits the monitoring data to the cloud. As a result, the monitoring data acquired by the cloud is disordered and difficult to analyze and manage.

CN 111 565 222A (SHENHUA SHENDONG COAL GROUP CORP LTD) 21 August 2020 (2020-08-21) discloses a coal mine pressure monitoring data processing method. The method includes obtaining original format files that include coal mine data information in each coal mine subsystem, configuring each original format file as a target format file according to the coal mine data information and preset target encoding rules and sending the target format file through a target communication protocol.

US 2020/110747 A1 (SUGIMOTO KEN [JP] ET AL) 9 April 2020 (2020-04-09) discloses a computer system that includes a first computer and a second computer. The second computer includes a minimum analysis dataset in which a data item serving as an analysis target and a repetition unit are defined in advance for each analysis target and an agent. The agent receives an analysis target data fetching designation including the minimum analysis dataset, a repetition range of repeating acquisition of data, and a repetition unit. The agent generates a first process that acquires data from the first computer and a first instance that executes processing within the first process on the basis of the repetition range and the repetition unit and activate the first instance to acquire the accumulated data from the first computer. When the processing of the first instance is completed, the agent generates a second process that executes analysis processing and a second instance that executes processing within the second process.

### SUMMARY

The underlying problem of the present invention is solved by the subject matter of the independent claims. Embodiments of the present disclosure provide a method and system for transmitting monitoring data and a periphery device, which can solve the problem in the related art that it is difficult to analyze and manage acquired monitoring data for a cloud.

The technical solutions according to the present disclosure at least achieve the following beneficial effects.

By the method according to the present disclosure, a plurality of first files are acquired by segmenting monitoring data acquired from at least one monitoring device, and the plurality of first files are transmitted to a cloud. Since the cloud acquires the monitoring data in the form of the first files, it is convenient to analyze and manage the monitoring data in different first files, and the flexibility is improved. In addition, as the file formats of the plurality of first files transmitted by the periphery device to the cloud are the same, a parsing engine capable of parsing the first files only needs to be installed on the cloud. In this way, the efficiency of file parsing is improved and the complexity is lowered, and the memory occupied by the parsing engine may be reduced.

### BRIEF DESCRIPTION OF THE DRAWINGS

For clearer descriptions of the technical solutions in the embodiments of the present disclosure, the following briefly introduces the accompanying drawings required for describing the embodiments. Apparently, the accompanying drawings in the following description show merely some embodiments of the present disclosure, and those skilled in the art may still derive other drawings from these accompanying drawings without creative efforts.
FIG. 1 is a schematic structural diagram of a system for transmitting monitoring data according to an embodiment of the present disclosure;
FIG. 2 is a flowchart of a method for transmitting monitoring data according to an embodiment of the present disclosure;
FIG. 3 is a flowchart of another method for transmitting monitoring data according to an embodiment of the present disclosure;
FIG. 4 is a schematic diagram of flow of monitoring data according to an embodiment of the present disclosure;
FIG. 5 is a schematic diagram of a timeline according toy an embodiment of the present disclosure;
FIG. 6 is a schematic diagram of a relation between a load and a parallelism of a periphery device according to an embodiment of the present disclosure;
FIG. 7 is a schematic structural diagram of a periphery device according to an embodiment of the present disclosure; and
FIG. 8 is a schematic structural diagram of another periphery device according to an embodiment of the present disclosure.

### DETAILED DESCRIPTION

For clearer descriptions of the objectives, technical solutions, and advantages of the present disclosure, embodiments of the present disclosure are described in detail hereinafter with reference to the accompanying drawings.

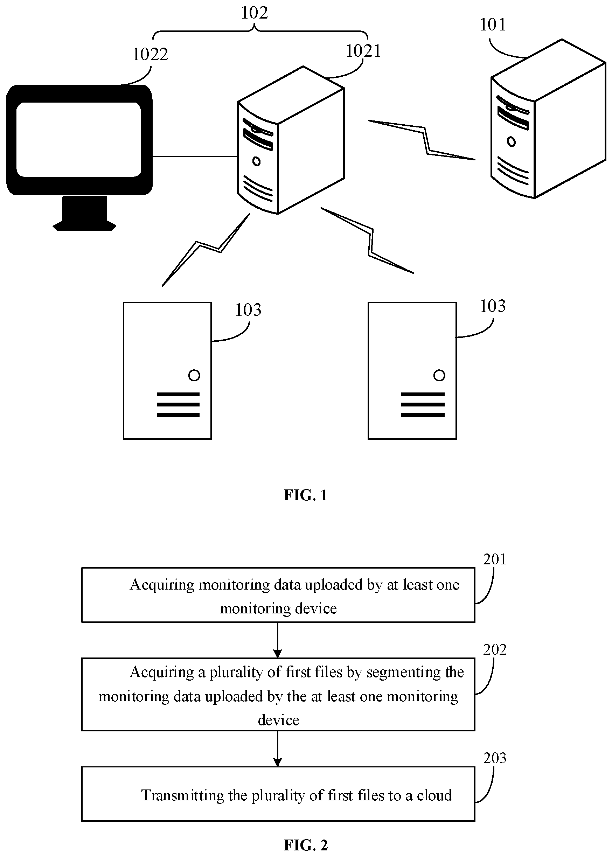

FIG. 1 is a schematic structural diagram of a system for transmitting monitoring data according to an embodiment of the present disclosure. Referring to FIG. 1, the system 10 for transmitting monitoring data may include a cloud 101, a periphery device 102, and one or more monitoring devices 103. For example, FIG. 1 illustrates two monitoring devices 103. The periphery device 102 may establish a communication connection with the cloud 101 and each of the monitoring devices 103 through a wired or wireless network. The cloud 101 may also be referred to as a cloud platform, and may have data storage and data processing functions.

The cloud 101 and each of the monitoring devices 103 may all be a server, or a server cluster composed of several servers, or a cloud computing service center. The periphery device 102 may include a host 1021 and a display 1022. The host 1021 may be a server, or a server cluster composed of several servers, or a cloud computing service center. The display 1022 is at least configured to display monitoring data acquired from the monitoring device 103.

In an exemplary embodiment, the monitoring device 103 may be connected to a plurality of photovoltaic devices in a photovoltaic power station to monitor running data of each photovoltaic device. The monitoring device 103 may transmit the monitored running data of the photovoltaic device serving as monitoring data to the periphery device 102. The periphery device 102 may then transmit the running data to the cloud 101 for storage. The display 1022 of the periphery device 102 may be at least configured to display the running data of the photovoltaic device.

FIG. 2 is a flowchart of a method for transmitting monitoring data according to an embodiment of the present disclosure. The method is applicable to the periphery device 102 shown in FIG. 1. Referring to FIG. 2, the method may include the following steps.

In step 201, monitoring data uploaded by at least one monitoring device is acquired.

In embodiments of the present disclosure, at least one monitoring device 103 in the system 10 for transmitting monitoring data may transmit the monitored monitoring data to the periphery device 102. The periphery device 102 may then acquire the monitoring data uploaded by the at least one monitoring device 103.

In step 202, a plurality of first files are acquired by segmenting the monitoring data uploaded by the at least one monitoring device.

In embodiments of the present disclosure, the periphery device 102 may acquire a plurality of first files by segmenting the acquired monitoring data. A file format of each of the first files is a target format, that is, the file formats of a plurality of first files acquired by the periphery device 102 are the same.

In an exemplary embodiment, at least one of data formats of monitoring data in different first files, the monitoring device 103 to which the monitoring data belongs, and a counting cycle of the monitoring data monitored by the monitoring device 103 is different.

In step 203, the plurality of first files are transmitted to a cloud.

In embodiments of the present disclosure, upon acquiring a plurality of first files, the periphery device 102 may transmit the plurality of first files to the cloud 101. The cloud 101 may store the plurality of first files. Then, the cloud may parse a particular first file stored in the cloud 101 to perform data analysis on monitoring data of the first file.

As the file formats of the plurality of first files stored in the cloud 101 are all target formats, a parsing engine capable of parsing the files of the target format only needs to be installed on the cloud 101, rather than parsing engines capable of parsing files of different file formats. Therefore, the number of parsing engines installed on the cloud 101 may be smaller, the occupied memory may be less, the efficiency of file parsing is higher, and the complexity is lower.

In summary, embodiments of the present disclosure provide a method for transmitting monitoring data. By the method, a plurality of first files are acquired by segmenting the monitoring data acquired from at least one monitoring device, and the plurality of first files are transmitted to the cloud. Since the cloud acquires the monitoring data in the form of the first files, it is convenient to analyze and manage the monitoring data in different first files, and the flexibility is improved. In addition, as the file formats of the plurality of first files transmitted by the periphery device to the cloud are the same, a parsing engine capable of parsing the first files only needs to be installed on the cloud. In this way, the efficiency of file parsing is improved and the complexity is lowered, and the memory occupied by the parsing engine may be reduced.

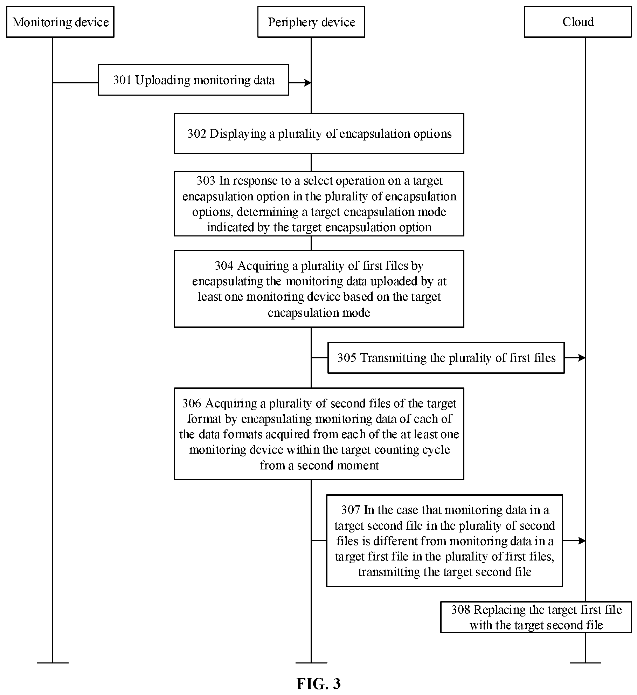

FIG. 3 is a flowchart of another method for transmitting monitoring data according to an embodiment of the present disclosure. The method is applicable to the periphery device 102 shown in FIG. 1. Referring to FIG. 3, the method may include the following steps.

In step 301, a monitoring device uploads monitoring data to a periphery device.

In embodiments of the present disclosure, the monitoring device 103 may be a device for monitoring running data (i.e., monitoring data) of photovoltaic devices in a photovoltaic power station. Upon acquiring the monitoring data, the monitoring device 103 may transmit the monitoring data to the periphery device 102. The periphery device 102 may then acquire the monitoring data uploaded by at least one monitoring device 103 connected thereto. The monitoring data uploaded by each of the at least one monitoring device 103 has a plurality of data formats.

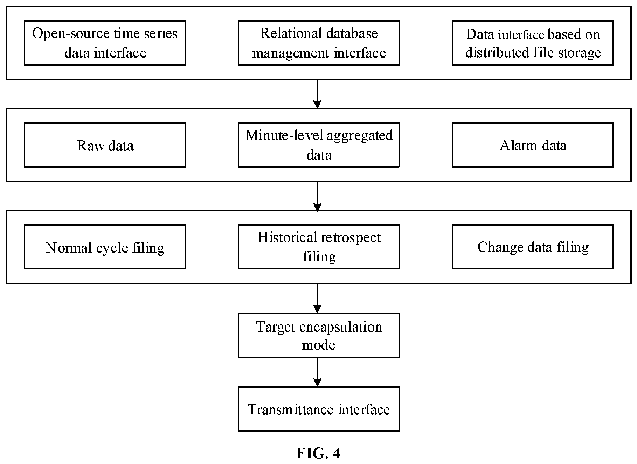

In some embodiments, the periphery device 102 may include a plurality of different acquisition interfaces, wherein each acquisition interface may be configured to acquire monitoring data of one data format, and data formats of the monitoring data acquired by the periphery device 102 through different acquisition interfaces are different. In an exemplary embodiment, referring to FIG. 4, the periphery device 102 may include an open-source time series data (influxDB) interface, a relational database management (Mysql) interface, and a data (MongoD) interface based on distributed file storage. The data formats of monitoring data acquired by the periphery device 102 through the influxDB interface, the Mysql interface and the MongoD interface are all different.

Further, the monitoring data acquired by the periphery device 102 from the monitoring device 103 may be data of different types. For example, referring to FIG. 4, the monitoring data my include raw data, minute-level aggregated data (5-minute or 10-minute level) and alarm data, and the like. The raw data may be telemetry data, remote signaling data, remote adjustment data and remote control data, and the like. The type of the monitoring data acquired by each acquisition interface may be same or different.

In step 302, the periphery device displays a plurality of encapsulation options.

In embodiments of the present disclosure, the display 1022 of the periphery device 102 may display a plurality of encapsulation options. Different encapsulation options indicate different encapsulation modes. At least one of a display effect and an arrangement manner of monitoring data in the first files finally acquired by using the different encapsulation modes is different. The display effect may include at least one of font colour and font size.

In step 303, in response to a select operation on a target encapsulation option in the plurality of encapsulation options, the periphery device determines a target encapsulation mode indicated by the target encapsulation option.

In embodiments of the present disclosure, when encapsulating monitoring data, a monitoring person may trigger the select operation on the target encapsulation option in the plurality of encapsulation options. Upon receiving the selection operation for the target encapsulation option, the periphery device 102 may determine the target encapsulation mode indicated by the target encapsulation option.

In some embodiments, the display 1022 of the periphery device 102 displays a wide table button and a narrow table button. The encapsulation mode indicated by the wide table button is a wide table encapsulation mode, and the encapsulation mode indicated by the narrow table button is a narrow table encapsulation mode.

In the case that the monitoring person triggers a click operation for the wide table button, the periphery device 102 may receive the click operation for the wide table button, and determine that the target encapsulation mode is the wide table encapsulation mode indicated by the wide table button. In the case that the monitoring person triggers a click operation for the narrow table button, the periphery device 102 may receive the click operation for the narrow table button, and determine that the target encapsulation mode is the narrow table encapsulation mode indicated by the narrow table button.

In step 304, the periphery device acquires a plurality of first files by encapsulating monitoring data uploaded by at least one monitoring device based on the target encapsulation mode.

In the embodiments of the present disclosure, the periphery device 102 may further include a file generation interface. Upon acquiring monitoring data, the acquisition interface may transmit the acquired monitoring data to the file generation interface. The file generation interface may then acquire a plurality of first files by encapsulating the monitoring data based on the target encapsulation mode. The file format of each of the first files is the target format, that is, the file formats of a plurality of first files acquired by the periphery device may be all same. The target format may be a comma-separated values (CSV) format with higher universality.

In some embodiments, the monitoring data monitored by the monitoring device 103 may be transmitted to the acquisition interface of the periphery device 102 in real time. That is, the acquisition interface of the periphery device 102 may acquire the monitoring data in real time. Each acquisition interface may transmit the monitoring data to the file generation interface in a time period according to a data amount of the acquired monitoring data to improve the transmission efficiency of the monitoring data transmitted from the acquisition interface to the file generation interface. The time period is intended to indicate a time interval, and is negatively related with the data amount. That is, the more the data amount is, the smaller the time period is; the less the data amount is, the larger the time period is.

In an exemplary embodiment, in the case that an acquisition interface acquires a piece of monitoring data from the monitoring device 103 every second, the data amount of the monitoring data acquired by the acquisition interface in a fixed time range (e.g., one day) may be more. Thus, the time period corresponding to a piece of monitoring data acquired by the acquisition interface from the monitoring device 103 every second may be smaller (for example, the acquisition interface transmits monitoring data to the file generation interface every other hour).

In the case that an acquisition interface acquires a piece of monitoring data from the monitoring device 103 every minute, the data amount of the monitoring data acquired by the acquisition interface in a fixed time range (e.g., one day) may be less. Thus, the time period corresponding to a piece of monitoring data acquired by the acquisition interface from the monitoring device 103 every minute may be larger (for example, the acquisition interface transmits monitoring data to the file generation interface every other four hours).

In embodiments of the present disclosure, the periphery device 102 may classify monitoring data of each of the data formats monitored by each of the at least one monitoring device 103 within each counting cycle into one type. Then, a plurality of first files may be acquired by encapsulating each type of the classified monitoring data in a first file. That is, the monitoring data encapsulated in each of the first files is the monitoring data transmitted by the same monitoring device 103, and the monitoring data of the same data format within the same counting cycle.

In some embodiments, each counting cycle may be one day; or each counting cycle may be 12 hours; or each counting cycle may be two days. The counting cycle is not limited in the embodiments of the present disclosure.

In embodiments of the present disclosure, the periphery device 102 may acquire a plurality of first files by encapsulating monitoring data of each of the data formats acquired from the monitoring device 103 within a target counting cycle from a first moment. The first moment is a moment upon the target counting cycle, and a time difference between the first moment and an ending moment of the target counting cycle may be smaller than a threshold, for example, the time difference may be one minute.

In some embodiments, the periphery device 102 may also acquire a plurality of first files by encapsulating monitoring data of each of the data formats for any previous day acquired from the monitoring device 103 from a fixed moment every day. The data formats of the monitoring data in the plurality of first files are different. For example, the periphery device 102 may encapsulate monitoring data of each of the data formats for the previous day acquired from the monitoring device 103 at 0:00 a.m. every day.

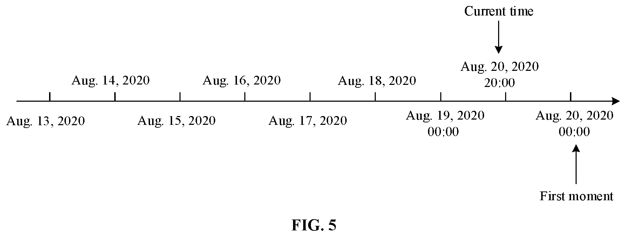

Referring to FIG. 5, when the current time is 8:00 p.m. (20:00) of Aug. 19, 2020, the periphery device 102 may encapsulate monitoring data of each format of Aug. 19, 2020 acquired from the monitoring device 103 at 0:00 a.m. (the first moment) of Aug. 20, 2020. Referring to FIG. 4, this manner may be referred to as normal cycle filing.

In some embodiments, when the current time is 8:00 p.m. (20:00) of Aug. 19, 2020, the periphery device 102 may encapsulate monitoring data of each format of Aug. 13, 2020 acquired from the monitoring device 103 at 0:00 a.m. of Aug. 20, 2020. Referring to FIG. 4, this manner may be referred to as historical retrospect filing.

It is to be noted that, the reason why the periphery device 102 acquires the monitoring data of each format of any day other than the previous day before 0:00 a.m. every day may be that the periphery device 102 fails to acquire the monitoring data in time due to communication interruption or communication delay between the periphery device 102 and the monitoring device 103.

In embodiments of the present disclosure, in the case that the target encapsulation mode determined by step 303 is wide table encapsulation, the periphery device 102 may encapsulate monitoring data uploaded by at least one monitoring device in the wide table encapsulation mode. In the case that the target encapsulation mode determined by step 303 is narrow table encapsulation, the periphery device 102 may encapsulate monitoring data uploaded by at least one monitoring device in the narrow table encapsulation mode.

The number of table columns of the first file acquired in the wide table encapsulation mode is greater than the number of table columns of the first file acquired in the narrow table capsulation manner, and the number of table rows of the first file acquired in the wide table encapsulation mode is smaller than the number of table rows of the first file acquired in the narrow table capsulation manner.

Table 1 lists the first file acquired in the wide table encapsulation mode, and illustrates 2000 sets of monitoring data transmitted by the monitoring device 103 with a serial number being 1 in every second of Aug. 27, 2020. Further, except for a header, each row of data may include 2000 sets of monitoring data in one second, and each column of data may include one of 2000 sets of monitoring data in the whole day of Aug. 27, 2020.

**Table 1**

| Serial number of the monitoring device | Time | 1^{st} set | 2^{nd} set | 3^{rd} set | ... | 1999^{th} set | 2000^{th} set |
|---|---|---|---|---|---|---|---|
| 1 | Aug. 27, 2020 00:00 | 1.1 | 2.1 | 100.5 | ... | 10.1 | 18.2 |
| 1 | Aug. 27, 2020 00:01 | 1.2 | 3.2 | 101.5 | ... | 11.1 | 19.2 |
| 1 | Aug. 27, 2020 00:02 | 1.3 | 4.3 | 102.5 | ... | 12.1 | 20.2 |
| 1 | ... | ... | ... | ... | ... | ... | ... |
| 1 | Aug. 27, 2020 23:59 | 20.1 | 30.1 | 201.1 | ...... | 100.1 | 300.2 |

In Table 1, the 3^{rd} set of monitoring data at 00:00 of Aug. 27, 2020 is 100.5. The 2000^{th} set of monitoring data at 23:59 of Aug. 27, 2020 is 300.2. In addition, "..." in Table 1 refers to an ellipsis, and Table 1 illustrates an arrangement manner of the monitoring data in the wide table.

Table 2 lists the first file acquired in the narrow table encapsulation mode, and includes 2000 sets of monitoring data in every second of Aug. 27, 2020. Further, the narrow table has a total of four columns. The first column is intended to indicate the serial number of the monitoring device 103, the second column is time including every second (repeat listing 2000 times every second) of Aug. 27, 2020, the third column is the number of sets of monitoring data (each second corresponds to 2000 sets), and the fourth column is the monitoring data.

**Table 2**

| Serial number of the monitoring device | Time | Number of sets | Monitoring data |
|---|---|---|---|
| 1 | Aug. 27, 2020 00:00 | 1^{st} set | 1.1 |
| 1 | Aug. 27, 2020 00:00 | 2^{nd} set | 2.1 |
| 1 | Aug. 27, 2020 00:00 | 3^{rd} set | 100.5 |
| 1 | ... | ... | ... |
| 1 | Aug. 27, 2020 00:00 | 1999^{th} set | 10.1 |
| 1 | Aug. 27, 2020 00:00 | 2000^{th} set | 18.2 |
| 1 | Aug. 27, 2020 00:01 | 1^{st} set | 1.2 |
| 1 | Aug. 27, 2020 0:01 | 2^{nd} set | 3.2 |
| 1 | Aug. 27, 2020 00:01 | 3^{rd} set | 101.5 |
| 1 | ... | ... | ... |
| 1 | Aug. 27, 2020 00:01 | 1999^{th} set | 11.1 |
| 1 | Aug. 27,2020 00:01 | 2000^{th} set | 19.2 |
| 1 | ... | ... | ... |
| 1 | Aug. 27, 2020 23:59 | 1^{st} set | 20.1 |
| 1 | Aug. 27, 2020 23:59 | 2^{nd} set | 30.1 |
| 1 | Aug. 27, 2020 23:59 | 3^{rd} set | 201.1 |
| 1 | ... | ... | ... |
| 1 | Aug. 27, 2020 23:59 | 1999^{th} set | 100.1 |
| 1 | Aug. 27, 2020 23:59 | 2000^{th} set | 300.2 |

In Table 2, the 3^{rd} set of monitoring data at 0:00 of Aug. 27, 2020 is 100.5. The 2000^{th} set of monitoring data at 23:59 of Aug. 27, 2020 is 300.2. In addition, "..." in Table 2 refers to the ellipsis, and Table 2 illustrates the arrangement manner of the monitoring data in the narrow table.

When encapsulating monitoring data uploaded by at least one monitoring device, the periphery device performs parallel encapsulation on the monitoring data to improve the data encapsulation efficiency.

In the embodiments of the present disclosure, parallel encapsulation of first files may affect a load of the periphery device 102. In some embodiments, the load of the periphery device 102 may be positively related with a parallelism degree of the parallel encapsulation. That is, the larger the parallelism degree is, the larger the load of the periphery device 102 is; the smaller the parallelism degree is, the smaller the load of the periphery device 102 is. The larger load of the periphery device 102 may affect the performance and stability of the periphery device 102.

A magnitude of the load of the periphery device 102 may be related with the number of monitoring devices 103 connected to the periphery device 102, and a memory footprint of a central processing unit (CPU) in the periphery device 102. In some embodiments, the load of the periphery device 102 may be positively related with the number of monitoring devices 103 connected to the periphery device 102, and the memory footprint of the CPU in the periphery device 102. That is, the more the number of monitoring devices 103 connected to the periphery device 102 is, the more the memory footprint of the CPU in the periphery device 102 is, and the higher the load of the periphery device 102 is; the less the number of monitoring devices 103 connected to the periphery device 102 is, the less the memory footprint of the CPU in the periphery device 102 is, and the lower the load of the periphery device 102 is.

Therefore, in a process of performing parallel encapsulation on monitoring data, the periphery device 102 may increase the parallelism degree from an initial value to a parallelism degree threshold to avoid too large load of the periphery device 102. Further, in a process of increasing the parallelism degree and upon increasing the parallelism degree to the parallelism degree threshold, the periphery device 102 may decrease the parallelism degree in response to detecting that the load of the periphery device is larger than a load threshold.

The initial value is smaller than the parallelism degree threshold. The decreased parallelism degree is negatively related with the load of the periphery device 102. That is, the decreased parallelism degree may be smaller due to the larger load of the periphery device 102; the decreased parallelism degree may be larger due to the smaller load of the periphery device 102.

In some embodiments, the periphery device 102 decreases the parallelism degree because the load of the periphery device 102 is larger than the load threshold, such that the load of the periphery device 102 is reduced, and the efficiency of parallel encapsulation is also ensured. In embodiments of the present disclosure, the decreased parallelism degree may be negatively related with a part of the load of the periphery device 102 exceeding the load threshold. That is, the larger the part of the load of the periphery device 102 exceeding the load threshold is, the smaller the decreased parallelism degree is; the smaller the part of the load of the periphery device 102 exceeding the load threshold is, the larger the decreased parallelism degree is.

In some embodiments, it is assumed that the load threshold of the periphery device 102 is 50%. In the case that it is detected that the load of the periphery device 102 is 55%, the part of load of the periphery device 102 exceeding the load threshold (5%) is smaller, such that only the parallelism degree needs to be reduced appropriately. In the case that the load of the periphery device 102 is 80%, the part of the load of the periphery device 102 exceeding the load threshold (30%) is larger, such that the decreased parallelism degree may be reduced to half of the parallelism degree before decrease.

It is assumed that the initial value of the parallelism degree is 1 (the number of first files parallel-encapsulated at the same moment is 1), and the parallelism degree threshold is 10. The load threshold of the periphery device 102 is 50%, and the decreased parallelism degree is half of the parallelism degree before decrease.

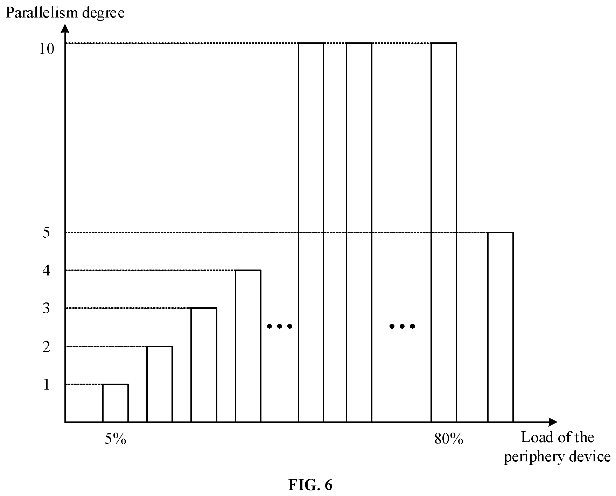

Referring to FIG. 6, the parallelism degree is gradually increased from 1 to 10. In the case that the parallelism degree is increased to 10, the periphery device 102 may always perform parallel encapsulation on monitoring data based on the parallelism degree being 10. In the case that the load of the periphery device 102 is greater than 50% resulted from other processes in the periphery device 102, the periphery device 102 may decrease the parallelism degree to reduce the load of the periphery device 102. For example, the decreased parallelism degree may be 5.

In some embodiments, in the case that the load of the periphery device 102 is greater than 50% before the parallelism degree is gradually increased from 1 to 10 (e.g., increased to 8), the periphery device 102 may decrease the parallelism degree rather than increase the parallelism degree, to reduce the load of the periphery device 102. For example, the decreased parallelism degree may be 4.

In the embodiments of the present disclosure, in response to detecting that the load of the periphery device 102 is not greater than the load threshold upon decreasing the parallelism degree, the periphery device 102 may gradually increase the decreased parallelism degree from the current value to the parallelism degree threshold. Further, in response to detecting that the load of the periphery device 102 is greater than the load threshold in the process of increasing the parallelism degree and upon increasing the parallelism degree to the parallelism degree threshold, the periphery device 102 may decrease the parallelism degree again, and the parallelism degree decreased again is negatively related with the load of the periphery device 102.

Through such repetition, the parallelism degree may be dynamically adjusted based on the load of the periphery device 102 to avoid affecting the performance and stability of the periphery device 102 due to too large load of the periphery device 102.

It is known from the step 304 that, the periphery device 102 may classify monitoring data of each of the data formats monitored by each monitoring device 103 within each counting cycle into one type. Then, each type of the classified monitoring data may be encapsulated in a first file. Further, in a process of encapsulating monitoring data, it is required to encapsulate the monitoring data based on the parallelism degree to avoid too large load of the periphery device 102. At the same time, the encapsulation mode of monitoring data may be determined based on the selection operation that is performed on the target encapsulation option in a plurality of encapsulation options displayed on the display 1022 and triggered by the monitoring person. Thus, in response to receiving the selection operation for the target encapsulation option, the periphery device 102 may encapsulate the monitoring data in the target encapsulation mode indicated by the target encapsulation option.

In other words, in the method according to the present disclosure, monitoring data may be encapsulated in consideration of different monitoring devices 103, different counting cycles, different data formats of monitoring data, the parallelism degree of parallel encapsulation determined based on the load of the periphery device 102, and different encapsulation modes.

In step 305, the plurality of first files are transmitted to a cloud.

In the embodiments of the present disclosure, referring to FIG. 4, the periphery device 102 may further include a transmission interface. Upon generating a plurality of first files, the file generation interface of the periphery device 102 may transmit the plurality of first files to the transmission interface. The transmission interface may then transmit the plurality of first files to the cloud 101. The cloud 101 may store the plurality of first files. Then, where data analysis needs tom be performed on monitoring data of a particular first file stored in the cloud 101, the first file may be parsed, and data analysis may be performed on the monitoring data encapsulated in the parsed first file.

Since file formats of the plurality of first files stored in the cloud 101 are all target formats, a parsing engine capable of parsing the files of the target format only needs to be installed on the cloud, rather than parsing engines capable of parsing files of different file formats. Therefore, the number of parsing engines installed in the cloud 101 may be reduced, the occupied memory may be less, and the flexibility of parsing is improved.

It is to be noted that, under the precondition that the periphery device 102 acquires a plurality of first files by encapsulating monitoring data of each of the data formats acquired from each of the monitoring devices 103 within the target counting cycle from the first moment, the method for transmitting monitoring data may further include the following step 306.

In step 306, the periphery device acquires a plurality of second files of the target format by encapsulating monitoring data of each of the data formats acquired from each monitoring device within the target counting cycle from a second moment.

In embodiments of the present disclosure, the second moment is a moment upon the first moment. Each of the second files corresponds to one first file. In some embodiments, a file identifier of each of the second files may be same as a file identifier of one corresponding first file. The file identifier may be a file name or a file serial number, or the like.

When the periphery device acquires files by encapsulating monitoring data, in the case that the counting cycles, data formats and monitoring devices 103 of monitoring data of two files are all same, the two files may carry the same file identifier. For example, in the case that the counting cycles, data formats and monitoring devices 103 of monitoring data of a target first file and a target second file are all same, the file identifier carried in the target first file is same as the file identifier carried in the target second file.

In some embodiments, the periphery device 102 may acquire a plurality of second files by encapsulating monitoring data of each of the data formats for the very day and the day before acquired from the monitoring device 103 at 0:00 a.m. every day, wherein the day before and the very day have an interval of one day.

When the current time is 8:00 p.m. (20:00) on Aug. 19, 2020, the periphery device 102 may encapsulate monitoring data of each of the data formats of Aug. 18, 2020 acquired from the monitoring device 103 at 0:00 a.m. on Aug. 20, 2020. The reason why the periphery device 102 acquires monitoring data of each of the data formats for two previous days may be that the periphery device 102 acquires incomplete monitoring data of Aug. 18, 2020 at 0:00 a.m. on Aug. 19, 2020 resulted from time delay of the monitoring data transmitted from the monitoring device 103 to the periphery device 102. That is, the monitoring data in the first file encapsulated at 0:00 a.m. on Aug. 19, 2020 is missing. Thus, it is required to encapsulate the monitoring data of each of the data formats of Aug. 18, 2020 again at 0:00 a.m. on Aug. 20, 2020.

It is to be noted that, for details about acquiring a plurality of second files aby encapsulation in step 306, reference may be made to the process of acquiring a plurality of first files by encapsulation in step 304, which are not repeated in the embodiments of the present disclosure.

In step 307, in response to detecting that the monitoring data in the target second file in a plurality of second files is different from the monitoring data in the target first file in a plurality of first files, the periphery device transmits the target second file to the cloud.

In the embodiments of the present disclosure, the periphery device 102 acquires a plurality of second files by encapsulating monitoring data of each of the data formats acquired from the monitoring device 103 within the target counting cycle from the second moment. Then, the periphery device 102 may detect whether the monitoring data in the target second file in a plurality of second files is changed relative to the monitoring data in the target first file in a plurality of first files.

The data format of the monitoring data in the target second file is same as the data format of the monitoring data in the target first file. That is, the counting cycles, data formats and monitoring devices 103 of the monitoring data in the target first file and the target second file are all same.

In the embodiments of the present disclosure, each of the second files and each of the first files carry a hash value. The periphery device 102 may determine whether the monitoring data in the target second file is changed relative to the monitoring data in the target first file based on the hash value (e.g., Md₅ in the hash value) carried in the target second file and the hash value carried in the target first file. In some embodiments, in the case that the hash value carried in the target second file is same as the hash value carried in the target first file, the periphery device 102 may determine that the monitoring data in the target second file is same as the monitoring data in the target first file. In the case that the hash value carried in the target second file is different from the hash value carried in the target first file, the periphery device 102 may determine that the monitoring data in the target second file is different from the monitoring data in the target first file.

In the case that the monitoring data in the target second file is different from the monitoring data in the target first file, it indicates that the monitoring data of the target first file previously transmitted by the periphery device 102 to the cloud 101 may be missing. Thus, the periphery device 102 may transmit the target second file to the cloud 101.

In the case that the monitoring data in the target second file is same as the monitoring data in the target first file, it indicates that the monitoring data of the target first file previously transmitted by the periphery device 102 to the cloud 101 is complete. Thus, the periphery device 102 does not need to transmit the target second file to the cloud 101, and the following step 309 is not necessary.

In step 308, the cloud replaces the target first file with the target second file.

In the embodiments of the present disclosure, upon receiving the target second file from the periphery device, the cloud may replace the target first file corresponding to the target second file with the target second file.

In some embodiments, each of the first files and each of the second files that are transmitted by the periphery device to the cloud both carry file identifiers. Upon receiving the target second file, the cloud 101 may store the target second file and delete the previously stored target first file carrying the same file identifier as that of the target second file. That is, the cloud 101 may replace the target first file with the target second file to ensure the accuracy of monitoring data in the file stored in the cloud 101. Referring to FIG. 4, this manner may be referred to as change data filing.

In the embodiments of the present disclosure, due to limitations of geographical conditions and security, the periphery device and the cloud which are included in the system for transmitting monitoring data may be disconnected from the Internet for a long time, and files acquired by encapsulating monitoring data acquired by the periphery device from the monitoring device cannot be transmitted to the cloud. Therefore, the files acquired based on the monitoring data acquired from the monitoring device can only be temporarily stored in the periphery device. However, due to a limited storage space of the periphery device, the performance and stability of the periphery device may be affected along with the increase of the stored files. As a result, operation and maintenance staff may manually copy the files stored in the periphery device to the cloud regularly.

It is to be noted that, orders of steps of the method for transmitting monitoring data according to the present disclosure may be adjusted appropriately, and the steps may also be increased or decreased correspondingly depending on circumstances. For example, steps 302 and 303 may be performed before step 301; or steps 302 and 303 may be deleted depending on circumstances. Correspondingly, in step 304, the periphery device may acquire a plurality of first files by encapsulating monitoring data uploaded by at least one monitoring device in a preset encapsulation mode. For another example, steps 306 to 308 may be deleted depending on circumstances. Any varied methods that may easily occur to those skilled in the art within the technical scope of the present disclosure shall fall in the scope of protection of the present disclosure, and will not be repeated here.

In summary, the embodiments of the present disclosure provide a method for transmitting monitoring data. By the method, a plurality of first files are acquired by segmenting monitoring data acquired from at least one monitoring device, and the plurality of first files are transmitted to a cloud. Since the cloud acquires the monitoring data in the form of the first files, it is convenient to analyze and manage the monitoring data in different first files, and the flexibility is improved. In addition, as the file formats of the plurality of first files transmitted by the periphery device to the cloud are the same, a parsing engine capable of parsing the first files only needs to be installed on the cloud. In this way, the efficiency of file parsing is improved and the complexity is lowered, and the memory occupied by the parsing engine may be reduced.

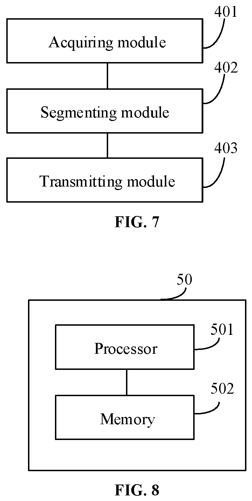

FIG. 7 is a schematic structural diagram of a periphery device according to an embodiment of the present disclosure. Referring to FIG. 7, the periphery device may include: an acquiring module 401, configured to acquire monitoring data uploaded by at least one monitoring device; a segmenting module 402, configured to acquire a plurality of first files by segmenting the monitoring data uploaded by the at least one monitoring device, wherein a file format of each of the first files is a target format; and a transmitting module 403, configured to transmit the plurality of first files to a cloud.

In some embodiments, monitoring data uploaded by each of the at least one monitoring device has a plurality of data formats; and the segmenting module 402 is further configured to: acquire the plurality of first files by encapsulating monitoring data of each of the data formats monitored by each of the at least one monitoring device within each counting cycle into one first file.

In some embodiments, the segmenting module 402 is further configured to: acquire the plurality of first files by encapsulating monitoring data of each of the data formats acquired by the monitoring device within a target counting cycle from a first moment, wherein the first moment is a moment upon the target counting cycle.

In some embodiments, the segmenting module 402 is further configured to: acquire a plurality of second files of the target format by encapsulating monitoring data of each of the data formats acquired by each of the at least one monitoring device within the target counting cycle from a second moment, wherein the second moment is a moment upon the first moment, and each of the second files corresponds to one first file.

In some embodiments, the transmitting module 403 is further configured to: in the case that monitoring data in a target second file in the plurality of second files is different from monitoring data in a target first file in the plurality of first files, the target first file corresponding to the target second file, transmit the target second file to the cloud, wherein a data format of the monitoring data in the target second file is the same as the data format of the monitoring data in the target first file, and wherein the target second file is intended to replace the target first file by the cloud.

In some embodiments, the segmenting module 402 is further configured to: acquire the plurality of first files by parallelly encapsulating the monitoring data uploaded by the at least one monitoring device.

In some embodiments, the segmenting module 402 is further configured to: in a process of parallelly encapsulating the monitoring data, increase a parallelism degree from an initial value to a parallelism degree threshold; and in a process of increasing the parallelism degree and upon increasing the parallelism degree to the parallelism degree threshold, in response to detecting that a load of the periphery device is larger than a load threshold, decrease the parallelism degree, a magnitude of a decreased parallelism degree being negatively related with the load of the periphery device.

In some embodiments, the segmenting module 402 is further configured to: display a plurality of encapsulation options, different encapsulation options indicating different encapsulation modes; and in response to a select operation on a target encapsulation option in the plurality of encapsulation options, acquire the plurality of first files by encapsulating the monitoring data uploaded by the at least one monitoring device according to a target encapsulation mode indicated by the target encapsulation option; wherein different encapsulation options indicate different encapsulation modes, and at least one of a display effect and an arrangement manner of monitoring data in the first files acquired by using the different encapsulation modes is different.

In summary, the embodiments of the present disclosure provide a periphery device. The periphery device acquires a plurality of first files by segmenting the monitoring data acquired from at least one monitoring device, and transmits the plurality of first files to the cloud. Since the cloud acquires the monitoring data in the form of the first files, it is convenient to analyze and manage the monitoring data in different first files, and the flexibility is improved. In addition, as the file formats of the plurality of first files transmitted by the periphery device to the cloud are the same, a parsing engine capable of parsing the first files only needs to be installed on the cloud. In this way, the efficiency of file parsing is improved and the complexity is lowered, and the memory occupied by the parsing engine may be reduced.

Those skilled in the art can clearly understand that for the convenience and brevity of description, the specific working processes of the above-described modules can refer to the corresponding processes in the foregoing method embodiments, and will not be repeated here.

FIG. 8 is a schematic structural diagram of another periphery device according to an embodiment of the present disclosure. Referring to FIG. 8, the periphery device may include a processor 501, a memory 502, and a computer program which is stored in the memory 502 and runnable on the processor. The processor 501, when loading and running the computer program, is caused to perform the method for transmitting monitoring data according to the above method embodiments, for example, the method shown in FIG. 2 or 3.

An embodiment of the present disclosure provides a computer-readable storage medium storing one or more instructions therein. The one or more instructions, when loaded and executed by a processor of a computer, cause the computer to perform the method for transmitting monitoring data according to the above method embodiments, for example, the method shown in FIG. 2 or 3.

An embodiment of the present disclosure provides a computer program product storing one or more instructions. The computer program product, when loaded and run by a computer of a computer, causes the computer to perform the method for transmitting monitoring data according to the above method embodiments, for example, the method shown in FIG. 2 or 3.

Described above are merely exemplary embodiments of the present disclosure, and are not intended to limit the present disclosure. The scope of the patent is defined by the appended claims.

## Claims

1. A method for transmitting monitoring data, applicable to a periphery device (102), the method comprising:
acquiring (201) monitoring data uploaded (301) by at least one monitoring device (103);
acquiring (304) a plurality of first files by parallelly encapsulating the monitoring data uploaded (301) by the at least one monitoring device (103), wherein a file format of each of the first files is a target format; and
transmitting (305) the plurality of first files to a cloud (101); wherein
in a process of parallelly encapsulating the monitoring data, increasing a parallelism degree from an initial value to a parallelism degree threshold, the parallelism degree indicating a number of first files under parallel encapsulation at the same moment; and
in a process of increasing the parallelism degree and upon increasing the parallelism degree to the parallelism degree threshold, in response to detecting that a load of the periphery device (102) is larger than a load threshold, decreasing the parallelism degree, a magnitude of the decreased parallelism degree being negatively related with the load of the periphery device (102).

2. The method according to claim 1, wherein the monitoring data uploaded (301) by each of at least one monitoring device (103) has a plurality of data formats; and acquiring (304) the plurality of first files by parallelly encapsulating the monitoring data uploaded (301) by the at least one monitoring device (103) comprises:
acquiring (304) the plurality of first files by encapsulating monitoring data of each of the data formats monitored by each of the at least one monitoring device (103) within each counting cycle into one first file.

3. The method according to claim 2, wherein acquiring (304) the plurality of first files by parallelly encapsulating the monitoring data of each of the data formats monitored by each of the at least one monitoring device (103) within each counting cycle into one first file comprises:
acquiring (304) the plurality of first files by encapsulating monitoring data of each of the data formats acquired by each of the at least one monitoring device (103) within a target counting cycle from a first moment;
wherein the first moment is a moment upon the target counting cycle.

4. The method according to claim 3, wherein upon transmitting (305) the plurality of first files to the cloud (101), the method further comprises:
acquiring (306) a plurality of second files of the target format by encapsulating monitoring data of each of the data formats acquired by each of the at least one monitoring device (103) within the target counting cycle from a second moment,
wherein the second moment is a moment upon the first moment, and each of the second files corresponds to one first file; and
in the case that monitoring data in a target second file in the plurality of second files is different from monitoring data in a target first file in the plurality of first files, the target first file corresponding to the target second file, transmitting (307) the target second file to the cloud (101);
wherein a data format of the monitoring data in the target second file is the same as the data format of the monitoring data in the target first file, and wherein the target second file is intended to replace the target first file by the cloud (101).

5. The method according to any of claims 1 to 4, wherein acquiring (304) the plurality of first files by parallelly encapsulating the monitoring data uploaded (301) by the at least one monitoring device (103) comprises:
displaying a plurality of encapsulation options, different encapsulation options indicating different encapsulation modes; and
in response to a select operation on a target encapsulation option in the plurality of encapsulation options, acquiring (304) the plurality of first files by encapsulating the monitoring data uploaded (301) by the at least one monitoring device (103) according to a target encapsulation mode indicated by the target encapsulation option;
wherein at least one of a display effect and an arrangement manner of monitoring data in the first files acquired by using the different encapsulation modes is different.

6. A periphery device (102), comprising:
an acquiring module (401), configured to acquire (201) monitoring data uploaded (301) by at least one monitoring device (103);
a segmenting module (402), configured to acquire (304) a plurality of first files by parallelly encapsulating the monitoring data uploaded (301) by the at least one monitoring device (103), wherein a file format of each of the first files is a target format; and
a transmitting module (403), configured to transmit (305) the plurality of first files to a cloud (101); wherein the periphery device (102) is adapted to:
in a process of parallelly encapsulating the monitoring data, increase a parallelism degree from an initial value to a parallelism degree threshold, the parallelism degree indicating a number of first files under parallel encapsulation at the same moment; and
in a process of increasing the parallelism degree and upon increasing the parallelism degree to the parallelism degree threshold, in response to detecting that a load of the periphery device (102) is larger than a load threshold, decrease the parallelism degree, a magnitude of the decreased parallelism degree being negatively related with the load of the periphery device (102).

7. A system for transmitting monitoring data, comprising at least one monitoring device (103), a cloud (101), and a periphery device (102) according to claim 6, wherein
the periphery device (102) is communicably connected to the monitoring device (103) and the cloud (101).

8. A computer-readable storage medium (502) storing one or more instructions therein, wherein the one or more instructions, when loaded and executed by a processor (501) of a computer, cause the computer to perform the method for transmitting monitoring data as defined in any one of claims 1 to 5.

## Patentansprüche

1. Verfahren zum Senden von Überwachungsdaten, die auf eine Peripherievorrichtung (102) anwendbar sind, das Verfahren umfassend:
Erfassen (201) von von mindestens einer Überwachungsvorrichtung (103) hochgeladenen (301) Überwachungsdaten;
Erfassen (304) einer Vielzahl von ersten Dateien durch paralleles Einkapseln der von der mindestens einen Überwachungsvorrichtung (103) hochgeladenen (301) Überwachungsdaten, wobei ein Dateiformat jeder der ersten Dateien ein Zielformat ist; und
Senden (305) der Vielzahl von ersten Dateien an eine Cloud (101); wobei
in einem Prozess des parallelen Einkapselns der Überwachungsdaten Anheben eines Parallelitätsgrades von einem Anfangswert zu einem Parallelitätsgradschwellenwert, wobei der Parallelitätsgrad eine Zahl von ersten Dateien angibt, die zum gleichen Zeitpunkt unter paralleler Einkapselung sind; und in einem Prozess des Anhebens des Parallelitätsgrades und nach Anheben des Parallelitätsgrades auf den Parallelitätsgradschwellenwert, als Antwort auf das Erkennen, dass eine Last der Peripherievorrichtung (102) größer als ein Lastschwellenwert ist, Reduzieren des Parallelitätsgrades, wobei eine Magnitude des reduzierten Parallelitätsgrades in Bezug auf die Last der Peripherievorrichtung (102) negativ ist.

2. Verfahren nach Anspruch 1, wobei die von jeder der mindestens einen Überwachungsvorrichtung (103) hochgeladenen (301) Überwachungsdaten eine Vielzahl von Datenformaten aufweisen; und das Erfassen (304) der Vielzahl von ersten Dateien durch paralleles Einkapseln der von der mindestens einen Überwachungsvorrichtung (103) hochgeladenen (301) Überwachungsdaten Folgendes umfasst: Erfassen (304) der Vielzahl von ersten Dateien durch Einkapseln von Überwachungsdaten jedes der von jeder der mindestens einen Überwachungsvorrichtungen (103) innerhalb jedes Zählzyklus überwachten Datenformate in eine erste Datei.

3. Verfahren nach Anspruch 2, wobei das Erfassen (304) der Vielzahl von ersten Dateien durch paralleles Einkapseln der Überwachungsdaten von jedem der von jeder der mindestens einen Überwachungsvorrichtung (103) innerhalb jedes Zählzyklus überwachten Datenformate in eine erste Datei Folgendes umfasst:
Erfassen (304) der Vielzahl von ersten Dateien durch Einkapseln von Überwachungsdaten von jedem der von jeder der mindestens einen Überwachungsvorrichtung (103) innerhalb eines Zielzählzyklus von einem ersten Zeitpunkt erfassten Datenformate;
wobei der erste Zeitpunkt ein Zeitpunkt auf dem Zielzählzyklus ist.

4. Verfahren nach Anspruch 3, wobei nach dem Senden (305) der Vielzahl von ersten Dateien an die Cloud (101) das Verfahren ferner Folgendes umfasst:
Erfassen (306) einer Vielzahl von zweiten Dateien des Zielformats durch Einkapseln von Überwachungsdaten jedes der von jeder der mindestens einen Überwachungsvorrichtung (103) innerhalb des Zielzählzyklus von einem zweiten Zeitpunkt erfassten Datenformate, wobei der zweite Zeitpunkt ein Zeitpunkt nach dem ersten Zeitpunkt ist und jede der zweiten Dateien einer ersten Datei entspricht; und
in dem Fall, dass sich Überwachungsdaten in einer zweiten Zieldatei in der Vielzahl von zweiten Dateien von Überwachungsdaten in einer ersten Zieldatei in der Vielzahl von ersten Dateien unterscheiden, wobei die erste Zieldatei der zweiten Zieldatei entspricht, Senden (307) der zweiten Zieldatei an die Cloud (101);
wobei ein Datenformat der Überwachungsdaten in der zweiten Zieldatei das gleiche ist wie das Datenformat der Überwachungsdaten in der ersten Zieldatei, und wobei die zweite Zieldatei dazu beabsichtigt ist, die erste Zieldatei durch die Cloud (101) zu ersetzen.

5. Verfahren nach einem der Ansprüche 1 bis 4, wobei das Erfassen (304) der Vielzahl von ersten Dateien durch paralleles Einkapseln der von der mindestens einen Überwachungsvorrichtung (103) hochgeladenen (301) Überwachungsdaten Folgendes umfasst:
Anzeigen einer Vielzahl von Einkapselungsoptionen, wobei unterschiedliche Einkapselungsoptionen unterschiedliche Einkapselungsmodi angeben; und
als Antwort auf einen Auswahlvorgang in einer Zieleinkapselungsoption in der Vielzahl von Einkapselungsoptionen, Erfassen (304) der Vielzahl von ersten Dateien durch Einkapseln der von der mindestens einen Überwachungsvorrichtung (103) hochgeladenen (301) Überwachungsdaten nach einem von der Zieleinkapselungsoption angegebenen Zieleinkapselungsmodus;
wobei mindestens eines von einem Anzeigeeffekt und einer Anordnungsweise von Überwachungsdaten in der unter Verwendung der unterschiedlichen Einkapselungsmodi erfassten ersten Dateien unterschiedlich ist.

6. Peripherievorrichtung (102), umfassend:
ein Erfassungsmodul (401), das dazu konfiguriert ist, hochgeladene (301) Überwachungsdaten
durch mindestens eine Überwachungsvorrichtung (103) zu erfassen (201);
ein Segmentierungsmodul (402), das dazu konfiguriert ist, eine Vielzahl von ersten Dateien durch paralleles Einkapseln der von der mindestens einen Überwachungsvorrichtung (103) hochgeladenen (301) Überwachungsdaten zu erfassen (304), wobei ein Dateiformat jeder der ersten Dateien ein Zielformat ist; und
ein Sendemodul (403), das dazu konfiguriert ist, die Vielzahl von ersten Dateien an eine Cloud (101) zu senden (305); wobei die Peripherievorrichtung (102) zu Folgendem angepasst ist: in einem Prozess des parallelen Einkapselns der Überwachungsdaten einen Parallelitätsgrad von einem Anfangswert zu einem Parallelitätsgradschwellenwert anzuheben, wobei der Parallelitätsgrad eine Zahl von ersten Dateien angibt, die zum gleichen Zeitpunkt unter paralleler Einkapselung sind; und in einem Prozess des Anhebens des Parallelitätsgrades und nach Anheben des Parallelitätsgrades auf den Parallelitätsgradschwellenwert, als Antwort auf das Erkennen, dass eine Last der Peripherievorrichtung (102) größer als ein Lastschwellenwert ist, den Parallelitätsgrad zu reduzieren, wobei eine Magnitude des reduzierten Parallelitätsgrades in Bezug auf die Last der Peripherievorrichtung (102) negativ ist.

7. System zum Senden von Überwachungsdaten, umfassend mindestens eine Überwachungsvorrichtung (103), eine Cloud (101) und eine Peripherievorrichtung (102) nach Anspruch 6, wobei die Peripherievorrichtung (102) kommunizierend mit der Überwachungsvorrichtung (103) und der Cloud (101) verbunden ist.

8. Computerlesbares Speichermedium (502), das darauf eine oder mehrere Anweisungen speichert, wobei die eine oder die mehreren Anweisungen, wenn sie von einem Prozessor (501) eines Computers geladen und ausgeführt werden, den Computer veranlassen, das Verfahren zum Senden von Überwachungsdaten, wie in einem der Ansprüche 1 bis 5 definiert, durchzuführen.

## Revendications

1. Procédé de transmission de données de surveillance, applicable à un dispositif périphérique (102), le procédé comprenant :
l'acquisition (201) de données de surveillance téléchargées (301) par au moins un dispositif de surveillance (103) ;
l'acquisition (304) d'une pluralité de premiers fichiers par encapsulation parallèle des données de surveillance téléchargées (301) par l'au moins un dispositif de surveillance (103), dans lequel un format de fichier de chacun des premiers fichiers est un format cible ; et
la transmission (305) de la pluralité de premiers fichiers à un nuage (101) ; dans lequel dans un processus d'encapsulation parallèle des données de surveillance, l'augmentation d'un degré de parallélisme d'une valeur initiale à un seuil de degré de parallélisme, le degré de parallélisme indiquant un nombre de premiers fichiers sous encapsulation parallèle au même moment ; et dans un processus d'augmentation du degré de parallélisme et lors de l'augmentation du degré de parallélisme au seuil de degré de parallélisme, en réponse à la détection qu'une charge du dispositif périphérique (102) est supérieure à un seuil de charge, la réduction du degré de parallélisme, une amplitude du degré de parallélisme réduit étant liée négativement à la charge du dispositif périphérique (102).

2. Procédé selon la revendication 1, dans lequel les données de surveillance téléchargées (301) par chacun d'au moins un dispositif de surveillance (103) ont une pluralité de formats de données ; et l'acquisition (304) de la pluralité de premiers fichiers par encapsulation parallèle des données de surveillance téléchargées (301) par l'au moins un dispositif de surveillance (103) comprend : l'acquisition (304) de la pluralité de premiers fichiers par encapsulation des données de surveillance de chacun des formats de données surveillés par chacun de l'au moins un dispositif de surveillance (103) au sein de chaque cycle de comptage dans un premier fichier.

3. Procédé selon la revendication 2, dans lequel l'acquisition (304) de la pluralité de premiers fichiers par encapsulation parallèle des données de surveillance de chacun des formats de données surveillés par chacun de l'au moins un dispositif de surveillance (103) au sein de chaque cycle de comptage dans un premier fichier comprend :
l'acquisition (304) de la pluralité de premiers fichiers par encapsulation des données de surveillance de chacun des formats de données acquis par chacun de l'au moins un dispositif de surveillance (103) au sein d'un cycle de comptage cible à partir d'un premier moment ;
dans lequel le premier moment est un moment lors du cycle de comptage cible.

4. Procédé selon la revendication 3, dans lequel, lors de la transmission (305) de la pluralité de premiers fichiers au nuage (101), le procédé comprend en outre :
l'acquisition (306) d'une pluralité de deuxièmes fichiers du format cible par encapsulation des données de surveillance de chacun des formats de données acquis par chacun de l'au moins un dispositif de surveillance (103) au sein du cycle de comptage cible à partir d'un deuxième moment, dans lequel le deuxième moment est un moment après le premier moment, et chacun des deuxièmes fichiers correspond à un premier fichier ; et
dans le cas où les données de surveillance dans un deuxième fichier cible dans la pluralité de deuxièmes fichiers sont différentes des données de surveillance dans un premier fichier cible dans la pluralité de premiers fichiers, le premier fichier cible correspondant au deuxième fichier cible, la transmission (307) du deuxième fichier cible au nuage (101) ;
dans lequel un format de données des données de surveillance dans le deuxième fichier cible est le même que le format de données des données de surveillance dans le premier fichier cible, et dans lequel le deuxième fichier cible est destiné à remplacer le premier fichier cible par le nuage (101).

5. Procédé selon l'une quelconque des revendications 1 à 4, dans lequel l'acquisition (304) de la pluralité de premiers fichiers par encapsulation parallèle des données de surveillance téléchargées (301) par l'au moins un dispositif de surveillance (103) comprend :
l'affichage d'une pluralité d'options d'encapsulation, différentes options d'encapsulation indiquant différents modes d'encapsulation ; et
en réponse à une opération de sélection sur une option d'encapsulation cible dans la pluralité d'options d'encapsulation, l'acquisition (304) de la pluralité de premiers fichiers par encapsulation des données de surveillance téléchargées (301) par l'au moins un dispositif de surveillance (103) selon un mode d'encapsulation cible indiqué par l'option d'encapsulation cible ;
dans lequel au moins l'un d'un effet d'affichage et d'une manière d'agencer les données de surveillance dans les premiers fichiers acquis en utilisant les différents modes d'encapsulation est différent.

6. Dispositif périphérique (102), comprenant :
un module d'acquisition (401), configuré pour acquérir (201) des données de surveillance téléchargées (301)
par au moins un dispositif de surveillance (103) ;
un module de segmentation (402), configuré pour acquérir (304) une pluralité de premiers fichiers par encapsulation parallèle des données de surveillance téléchargées (301) par l'au moins un dispositif de surveillance (103), dans lequel un format de fichier de chacun des premiers fichiers est un format cible ; et
un module de transmission (403), configuré pour transmettre (305) la pluralité de premiers fichiers à un nuage (101) ; dans lequel le dispositif périphérique (102) est adapté pour : dans un processus d'encapsulation parallèle des données de surveillance, augmenter un degré de parallélisme d'une valeur initiale à un seuil de degré de parallélisme, le degré de parallélisme indiquant un nombre de premiers fichiers sous encapsulation parallèle au même moment ; et dans un processus d'augmentation du degré de parallélisme et lors de l'augmentation du degré de parallélisme au seuil de degré de parallélisme, en réponse à la détection qu'une charge du dispositif périphérique (102) est supérieure à un seuil de charge, réduire le degré de parallélisme, une amplitude du degré de parallélisme réduit étant liée négativement à la charge du dispositif périphérique (102).

7. Système de transmission de données de surveillance, comprenant au moins un dispositif de surveillance (103), un nuage (101) et un dispositif périphérique (102) selon la revendication 6, dans lequel le dispositif périphérique (102) est connecté de manière communicative au dispositif de surveillance (103) et au nuage (101).

8. Support de stockage lisible par ordinateur (502) stockant une ou plusieurs instructions, dans lequel les une ou plusieurs instructions, lorsqu'elles sont chargées et exécutées par un processeur (501) d'un ordinateur, amènent l'ordinateur à réaliser le procédé de transmission de données de surveillance tel que défini dans l'une quelconque des revendications 1 à 5.
